(19) Europäisches Patentamt
European Patent Office
Office européen des brevets

(11) **EP 4 054 034 A1**

(12) **EUROPÄISCHE PATENTANMELDUNG**

(43) Veröffentlichungstag:
**07.09.2022 Patentblatt 2022/36**

(21) Anmeldenummer: **22159581.2**

(22) Anmeldetag: **02.03.2022**

(51) Internationale Patentklassifikation (IPC):
**H02G 15/08** (2006.01)    **H02G 7/05** (2006.01)
**H01R 4/14** (2006.01)

(52) Gemeinsame Patentklassifikation (CPC):
**H02G 15/08; H01R 4/14; H02G 7/05**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **04.03.2021 DE 102021202129**

(71) Anmelder: **Richard Bergner Holding GmbH & Co. KG**
**91126 Schwabach (DE)**

(72) Erfinder: **ERATH, Jürgen**
**91183 Abenberg (DE)**

(74) Vertreter: **FDST Patentanwälte**
**Nordostpark 16**
**90411 Nürnberg (DE)**

(54) **SEILVERBINDUNG SOWIE VORGEFERTIGTE SPIRALSTÄBE UND VERFAHREN ZUM VERBINDEN ZWEIER SEILENDEN EINES SEILS**

(57)    Die Erfindung betrifft eine Seilverbindung insbesondere einer Freileitung mit einem Verbindungsbereich, in dem zwei Seilenden eines Seils miteinander verbunden sind, wobei der Verbindungsbereich einen größeren Durchmesser als die Seilenden aufweist und wobei eine Spiralarmatur mit mehreren Spiralstäben vorgesehen ist, welche um den Verbindungsbereich sowie die daran angrenzenden Bereiche des Seils gewickelt sind. Hierdurch sind die elektrischen, mechanischen und thermischen Eigenschaften im Verbindungsbereich verbessert.

FIG 1

EP 4 054 034 A1

**Beschreibung**

Die Erfindung betrifft eine Seilverbindung insbesondere eine Leiterseilverbindung speziell bei einer Freileitung sowie ein Verfahren zum Verbinden zweier Seilenden eines Seils, speziell einer Freileitung.

Sowohl bei der Erstmontage einer Freileitung und speziell im Reparaturfall bei einem beschädigtem Leiterseil einer Freileitung ist es gewünscht, zwei Seilenden miteinander zu verbinden. Die dadurch gebildete Leiterseilverbindung muss hohen sowohl elektrischen als auch mechanischen Anforderungen standhalten. Zum Verbinden der Seilenden werden beispielsweise sogenannte Pressverbinder eingesetzt oder die beiden Seilenden werden miteinander verspleißt.

Leiterseile einer Freileitung sind im Betrieb hohen elektrischen, mechanischen sowie thermischen Anforderungen ausgesetzt. Die Leiterseile werden zwischen zwei (Freileitungs-) Masten häufig über mehrere hundert Meter gespannt. Die Leiterseile unterliegen daher hohen mechanischen Belastungen. Im Betrieb liegen in der Regel hohe Wechselspannungen von typischerweise mehr als 100 kV an. Das Leiterseil ist zur Übertragung von hohen Leistungen von typischerweise mehr als 10 MW und von hohen Strömen von typischerweise mehr als 100 A ausgebildet.

Aus der CH 402 097 A ist eine Seilverbindung zu entnehmen, bei der die Seilenden miteinander verspleißt sind und die Seilverbindung weiterhin aufgewickelte Spiralstäbe aufweist, die unmittelbar anliegend um die Seilenden gewickelt sind, wobei im Spleißbereich mehrere der Stäbe mit sich selbst verseilt sind und neben dem Spleißbereich entlanggeführt sind.

Ausgehend hiervon liegt der Erfindung die Aufgabe zugrunde, eine Leiterseilverbindung zu ermöglichen, die gute elektrische sowie mechanische Eigenschaften aufweist.

Die Aufgabe wird gemäß der Erfindung gelöst durch eine (Leiter-) Seilverbindung mit den Merkmalen des Anspruchs 1 sowie durch vorgefertigte Spiralstäbe und ein Verfahren zur Herstellung einer solchen Seilverbindung. Die nachfolgend im Hinblick auf die Seilverbindung angeführten Vorteile und bevorzugten Ausgestaltungen sind zumindest sinngemäß auch auf die Spiralstäbe sowie auf das Verfahren und umgekehrt zu übertragen.

Bei der Seilverbindung handelt es sich insbesondere um eine Leiterseilverbindung zur Verbindung zweier Seilenden eines Leiterseils speziell einer elektrischen Freileitung, wie sie eingangs definiert wurde.

Unter vorgefertigter Spiralstab wird vorliegend ein Spiralstab verstanden, welcher die nachfolgend angeführten Eigenschaften bereits vor seiner Montage aufweist.

Bevorzugte Weiterbildungen sind in den Unteransprüchen enthalten.

Bei der Seilverbindung sind zwei Seilenden miteinander über einen Verbindungsbereich, bevorzugt mithilfe eines Pressverbinders, miteinander verbunden. Dieser ist hülsenförmig ausgebildet und die beiden Seilenden sind jeweils in die Hülse eingesteckt und anschließend ist die Hülse gegen die Seilenden verpresst, sodass diese mechanisch im Pressverbinder fixiert sind. Alternativ besteht auch die Möglichkeit, den Verbindungsbereich als eine Spleißverbindung auszubilden, über die die Seilenden miteinander verbunden sind.

Unter Verbindungsbereich, über den die Seilenden miteinander verbunden sind, wird vorliegend sowohl eine mechanische als auch eine elektrische Verbindung zweier Seilenden verstanden, welche vorzugsweise bereits den mechanischen und elektrischen Anforderungen einer Seilverbindung für ein Leiterseil einer elektrischen Freileitung genügt oder zumindest weitgehend genügt.

In dem beispielsweise durch den Pressverbinder oder die Spleißverbindung gebildeten Verbindungsbereich liegt ein größerer Durchmesser als der eigentliche SeilDurchmesser vor. Um diesen Verbindungsbereich ist erfindungsgemäß eine Spiralarmatur mit mehreren Spiralstäben gewickelt, wobei diese um den Verbindungsbereich sowie um die daran angrenzenden Bereiche des Seils gewickelt sind. Dies bedeutet, dass die einzelnen Spiralstäbe ausgehend von dem einen Seilende durchgehend umlaufend sowohl um die angrenzenden Bereiche des Seils als auch um den Verbindungsbereich herumgeführt sind. Die Spiralstäbe sind im Verbindungsbereich bevorzugt gleichmäßig am Umfang des Pressverbinders verteilt. Die Spiralstäbe liegen dabei bevorzugt eng und unmittelbar an dem Pressverbinder, also an dem Verbindungsbereich an. Zwischen dem Verbindungsbereich und den Spiralstäben ist daher in radialer Richtung kein Abstand ausgebildet.

Weiterhin liegen die Spiralstäbe anschließend an den Verbindungsbereich ebenfalls eng und unmittelbar am Seil an.

Weiterhin ist hervorzuheben, dass vorzugsweise sämtliche für die Seilverbindung verwendeten Spiralstäbe identisch ausgebildet sind, es sich also um Gleichteile handelt. Zumindest weise alle Spiralstäbe die gleiche Länge und / oder die gleiche Aufteilung in die nachfolgend noch näher beschriebenen Endabschnitte und den mittleren Bereich auf.

Durch die Anordnung der Spiralarmatur mit den auch im Verbindungsbereich anliegenden Spiralstäben, die insbesondere gleichmäßig verteilt und eng anliegen, ist zunächst ein guter thermischer Kontakt erreicht, sodass die einzelnen Spiralstäbe quasi nach Art von Kühlrippen wirken, wodurch die Temperaturbelastung im Verbindungsbereich reduziert ist. Die Spiralstäbe bilden dabei eine Art Mantel für das Leiterseil im Verbindungsbereich aus. Durch die Spiralarmatur ist zugleich auch eine gute elektrische Verbindung erreicht, da aufgrund der geringeren Temperatur der Kontaktwiderstand im Verbindungsbereich reduziert ist. Ebenso werden durch diese Ausgestaltung Koronaeffekte reduziert.

Im Betrieb fließt der Hauptstrom über den Verbindungsbereich, wobei ergänzend zumindest ein Teilstrom auch über die Spiralarmatur fließt, sodass der Verbindungsbereich zusätzlich noch im Hinblick auf die Stromlast entlastet ist.

Schließlich ist durch die Spiralarmatur auch eine ergänzende mechanische Sicherung erreicht. Mit zunehmender Alterung der Pressverbindung kann sich diese nämlich etwas lösen. Die Spiralarmatur kann insbesondere in einem solchen Fall zumindest einen Teil der auf das Seil wirkenden Zugkraft übernehmen, sodass im Verbindungsbereich eine Zugentlastung erreicht ist.

Insgesamt weist daher die Spiralarmatur drei Funktionen auf, nämlich eine elektrische Funktion, indem über die Spiralarmatur auch ein Teil des elektrischen Stroms fließt, eine mechanische Sicherungsfunktion sowie eine Kühlfunktion.

In besonders zweckdienlicher Weise weist ein jeweiliger Spiralstab zwei gegenüberliegende Endabschnitte sowie einen zwischen diesen angeordneten mittleren Abschnitt auf, der im montierten Zustand im Bereich des Pressverbinders, also allgemeinen im Verbindungsbereich angeordnet ist und im Vergleich zu den Endabschnitten eine andere Steigung aufweist. Speziell weist er im mittleren Bereich eine größere Steigung auf. Der mittlere Bereich ist daher gegenüber den gegenüberliegenden Endabschnitten gestreckt oder gereckt. Alternativ oder ergänzend weist ein jeweiliger Spiralstab im mittleren Bereich einen größeren freien Innendurchmesser auf als in den Endabschnitten.

Bei der Herstellung werden daher die einzelnen Spiralstäbe in den einzelnen Abschnitten mit unterschiedlichen Steigungen / unterschiedlichen freien Innendurchmessern vorgefertigt. Typischerweise liegen in den Endabschnitten die gleichen Steigungen / gleiche Innendurchmesser vor und lediglich im mittleren Abschnitt ist die Steigung / der Innendurchmesser verändert.

Unter (freier) Innendurchmesser wird der Innenabstand zwischen gegenüberliegenden Windungsabschnitten der Spirale - betrachtet bei einer Projektion in Längsrichtung der Spirale- verstanden.

Unter Steigung wird vorliegend der (Längs-) Abstand zwischen zwei aufeinanderfolgenden Spiralabschnitten nach einer vollständigen Drehung um 360° verstanden, also der Längsabstand zwischen zwei in Seil-Längsrichtung aufeinanderfolgenden Spiralabschnitten. Dieser Längsabstand wird auch als Schlaglänge bezeichnet.

Die vorgefertigten Spiralstäbe sind dabei hinsichtlich ihrer Innendurchmesser in den Endabschnitten und im mittleren Bereich derart ausgebildet, dass diese Innendurchmesser an die Außendurchmesser der Seilenden einerseits und an den Außendurchmesser des Verbindungsbereiches (Pressverbinder) andererseits angepasst sind. Hierunter wird verstanden, dass der jeweilige Innendurchmesser gleich und vorzugsweise kleiner ist als der jeweils zugehörige Außendurchmesser. Dadurch ist ein enges Anliegen des Spiralstabes sowohl an dem Verbindungsbereich als auch an den sich daran anschließenden Bereichen des Seils gewährleistet.

Bevorzugt ist die Steigung im mittleren Bereich um 100 % bis 400 % und insbesondere um 200-300 % größer im Vergleich zu der Steigung in den Endbereichen. Dies bedeutet, dass der Längsabstand zwischen zwei in Längsrichtung aufeinanderfolgenden Spiralabschnitten im mittleren Abschnitt zwischen dem 2 - 5 fachen und insbesondere zwischen dem 3 - 4 fachen des Längsabstands in den Endabschnitten liegt. Bevorzugt ist die Steigung im mittleren Abschnitt über die Länge des mittleren Abschnitts konstant. Gleiches gilt vorzugsweise für die Endabschnitte. Die Endabschnitte weisen weiterhin vorzugsweise die gleiche Steigung auf.

Durch die unterschiedliche Steigung im mittleren Bereich ist zudem in diesem mittleren Bereich zwischen zwei in Seil-Längsrichtung benachbarten Windungsabschnitten ein Abstand ausgebildet, welcher größer ist als ein evtl. Abstand in den Endabschnitten.

Durch diese Maßnahme wird eine gleichmäßige Verteilung am Umfang und eine enganliegende Anpassung an den vergrößerten Durchmesser im Verbindungsbereich und damit u.A. ein guter thermischer Kontakt erreicht. Daneben wird hierdurch auch eine guter elektrischer Kontakt sowie eine hohe Reibung für eine gute mechanische Haftung erreicht. Gleichzeitig wird sichergestellt, dass die einzelnen Spiralstäbe eine nahezu geschlossenen Mantelfläche in den Endabschnitten ausbilden.

Insbesondere ist eine enganliegende und gleichmäßige Verteilung der Spiralstäbe am Umfang des Verbindungsbereiches, speziell des Pressverbinders erreicht.

Bevorzugt ist in den Endabschnitten durch die Spiralstäbe eine nahezu geschlossene Mantellage ausgebildet. Einander in Längsrichtung benachbarte Spiralabschnitte der Spiralstäbe weisen zueinander einen geringen Abstand auf, welcher beispielsweise kleiner oder gleich dem zweifachen Durchmesser und vorzugsweise kleiner dem einfachen oder auch halben Durchmesser eines jeweiligen Spiralstabes ist. Durch den (geringen) Abstand wird zugleich vermieden, dass sich die Spiralstäbe aneinander abstützen, wodurch u.U. das unmittelbare Anliegen der Spiralstäbe am Leiterseil und das Klemmen des Leiterseils durch die Spiralstäbe beeinträchtigt wäre.

In bevorzugter Ausgestaltung ist zwischen der Spiralarmatur und dem Seil eine Paste angebracht. Bevorzugt ist diese lediglich im Bereich der Endabschnitte und nicht im Verbindungsbereich (Pressverbinder) angebracht. Die Paste ist dabei derart ausgebildet, dass sie als Haftvermittler wirkt und / oder eine elektrische Leitfähigkeit aufweist.

Bevorzugt wirkt die Paste zumindest als Haftvermittler. Sie weist beispielsweise gleichzeitig eine elektrische und ggf. auch eine thermische Leitfähigkeit auf. Sie weist daher allgemein mehrere und insbesondere alle der zuvor genannten Eigenschaften auf. Die Paste ist ausreichend fest und beständig, so dass sie dauerhaft am Leiterseil haften bleibt.

Durch die Paste wird ein besonders inniger Kontakt zwischen den Spiralstäben und dem Leiterseil ausgebildet, wodurch sich die elektrische und / oder mechanische und / oder thermische Anbindung verbessert.

Durch die Paste ist allgemein die mechanische Befestigung der Spiralarmatur am Leiterseil verbessert und / oder der elektrische Kontaktwiderstand zwischen Spiralarmatur und Leiterseil verringert. Insgesamt ist dadurch die eigentliche Seilverbindung, speziell der Pressverbinder elektrisch und / oder mechanisch entlastet.

Bevorzugt weist die Paste Partikel auf. Die Partikel weisen beispielsweise eine Körnung im Bereich von 20 bis 150 und insbesondere im Bereich von 60 bis 100 auf. Die Körnung gibt dabei die Anzahl der (unmittelbar aneinander liegenden) Körner pro Zoll (25,4mm) an. Der Korndurchmesser bestimmt sich durch die Formel:

$$\text{Korngröße in mm} = 25{,}4 \,/\, \text{Körnung.}$$

Der Anteil der Partikel beträgt dabei vorzugsweise 8 Vol% bis 30 Vol% und insbesondere10 Vol% bis 20 Vol% bezogen auf das Gesamtvolumen der Paste.

Durch die Partikel wird die Reibung erhöht, so dass die Paste besonders gut als Haftvermittler wirkt und damit die mechanische Sicherung / Haftung verbessert ist.

Bevorzugt ist zumindest ein Teil der Partikel elektrisch leitfähig und diese bestehen beispielsweise aus einem Metall, insbesondere Aluminium. Hierdurch erhält die Paste eine elektrische Leitfähigkeit. Alternativ oder ergänzend weisen die Partikel eine gute thermische Leitfähigkeit auf.

Insgesamt wird durch die Kombination der als Haftvermittler ausgebildeten Paste und der Spirale eine gute elektrische sowie thermische Leitfähigkeit.

Bevorzugt sind mehrere unterschiedliche Arten von Partikeln enthalten, beispielsweise zwei Arten. Neben elektrisch leitfähigen Partikeln sind beispielsweise auch nicht-elektrisch leitfähige Partikel vorgesehen. Ergänzend oder alternativ unterscheiden sich die Partikel im Hinblick auf ihre Körnung und / oder allgemein durch ihr Material. Bevorzugt ist der Anteil der (beiden) Arten gleich oder zumindest nahezu gleich, so dass der Anteil insbesondere also zumindest jeweils in etwa der Hälfte des Gesamtanteils der Partikel in der Paste entspricht.

Durch die unterschiedlichen Partikel können gezielt unterschiedliche Eigenschaften der Paste - wie elektrische Leitfähigkeit und mechanische Reibung - eingestellt werden.

Die Paste weist neben den Partikeln weiterhin vorzugsweise eine Basis-Matrix auf, welche die pastöse Eigenschaft bestimmt und in der die Partikel insbesondere gleichmäßig verteilt enthalten sind.

Diese Basis Matrix besteht insbesondere aus einem Fett, speziell einem sogenannten Lithium - Fett, welches vorzugsweise EP-Additive aufweist.

Der Anteil der Basis-Matrix liegt beispielsweise im Bereich von 60 bis 90 Vol %. Bevorzugt liegt der Anteil der Basis-Matrix zusammen mit den Partikeln bei über 80 Vol %.

Die einzelnen Spiralstäbe bestehen typischerweise aus einem leitenden Material, speziell Aluminium. Sie weisen typischerweise einen Durchmesser im Bereich beispielsweise von 4 mm bis 12 mm und insbesondere im Bereich von 5 mm bis 10 mm auf.

Ein jeweiliges Leiterseil weist typischerweise einen Durchmesser im Bereich von 10 mm bis 60 mm und beispielsweise im Bereich zwischen 15mm und 50mm auf. Ein typischer Pressverbinder weist einen Durchmesser im Bereich von 30 mm bis 76 mm auf.

Bei der Montage wird derart vorgegangen, dass die einzelnen Spiralstäbe einzelweise und sukzessive über den Verbindungsbereich aufgewickelt werden. Bevorzugt wird zuvor die oben beschriebene Paste aufgebracht und zwar insbesondere nur in den Bereichen des Leiterseils, jedoch nicht im Verbindungsbereich. Die vorgefertigten Spiralstäbe werden also um den Verbindungsbereich sowie die daran angrenzenden Abschnitte der Leiterseile herumgeführt. Speziell ist dabei vorgesehen, dass die Spiralstäbe ausgehend von einem Mittenbereich des Verbindungsbereichs jeweils beidseitig nach außen hin um das Leiterseil herumgeführt werden.

Bei der Montage wird daher der jeweilige Spiralstab von der Mitte ausgehend auf den Verbindungsbereich aufgewickelt. Hierzu wird der Spiralstab mit seiner Mitte an der Mitte des Verbindungsbereichs angelegt und dann wird der Spiralstab zu beiden Seiten nach außen hin auf den Verbindungsbereich und auf die Leiterseile aufgedreht.

Um die Montage zu vereinfachen weisen die Spiralstäbe und / oder der Verbindungsbereich zumindest eine Hilfsmarkierung für die Montage auf.

Bevorzugt ist an einem jeweiligen Spiralstab eine Mittenmarkierung als Hilfsmarkierung angebracht, sodass bei der Montage die genaue Position des Spiralstabs relativ zum Verbindungsbereich erkennbar ist. Bevorzugt ist ergänzend oder alternativ am Verbindungsbereich, insbesondere auf dem Pressverbinder ebenfalls eine Mittenmarkierung als Hilfsmarkierung angebracht. Bei der Montage werden daher vorzugsweise zunächst die Mittenmarkierungen des Spiralstabs und des Verbindungsbereichs (Pressverbinder) aneinander ausgerichtet, bevor dann der Spiralstab beidseitig um den Verbindungsbereich und die Leiterseile gewickelt wird.

In bevorzugter Weiterbildung ist vorgesehen, dass an den Spiralstäben - einseitig oder beidseitig des mittleren Bereiches - der Anfang des Reckbereichs mit einer Hilfsmarkierung markiert ist. Unter Anfang des Reckbereichs wird der Bereich eines jeweiligen Spiralstabes verstanden, bei dem die Steigung sich verändert, bei dem also die Steigung des Endabschnittes in die Steigung des mittleren Abschnittes des jeweiligen Spiralstabes übergeht. Dies ist sowohl für die Herstellung als auch für die Montage von Vorteil.

Die gesamte Spiralarmatur weist typischerweise eine Länge von mehreren Metern auf. Der Verbindungsbereich selbst und damit insbesondere der Pressverbinder weisen bevorzugt eine Länge im Bereich von mehreren 10 cm bis über 2m auf.

Vorzugsweise werden mehrere Gruppen oder Arten von Spiralstäben vorbereitet, die sich im Hinblick auf Ihre Eigenschaften unterscheiden, insbesondere im Hinblick auf die freien Innendurchmesser und / oder den Steigungen im mittleren Bereich und den Endabschnitten. Die vorgefertigten Spiralstäbe sind daher an unterschiedliche Verbindungsbereiche und unterschiedliche Seilverbindungen angepasst.

Eine Ausführungsvariante der Erfindung ist in den Figuren näher dargestellt. Diese zeigen:

> FIG 1 eine Seitenansicht einer Seilverbindung,
> FIG 2 eine Schnittansicht entlang der Schnittlinie A-A in FIG 1
> FIG 3 eine Draufsicht auf die Seilverbindung von einem Seilende aus gesehen
> FIG 4 eine Seitenansicht einer Seilverbindung in Gesamtansicht,
> FIG 5 eine Seitenansicht auf einen einzelnen Spiralstab sowie
> FIG 6 eine Schnittdarstellung durch die Seilverbindung 2 entlang der Schnittlinie B-B in FIG 4

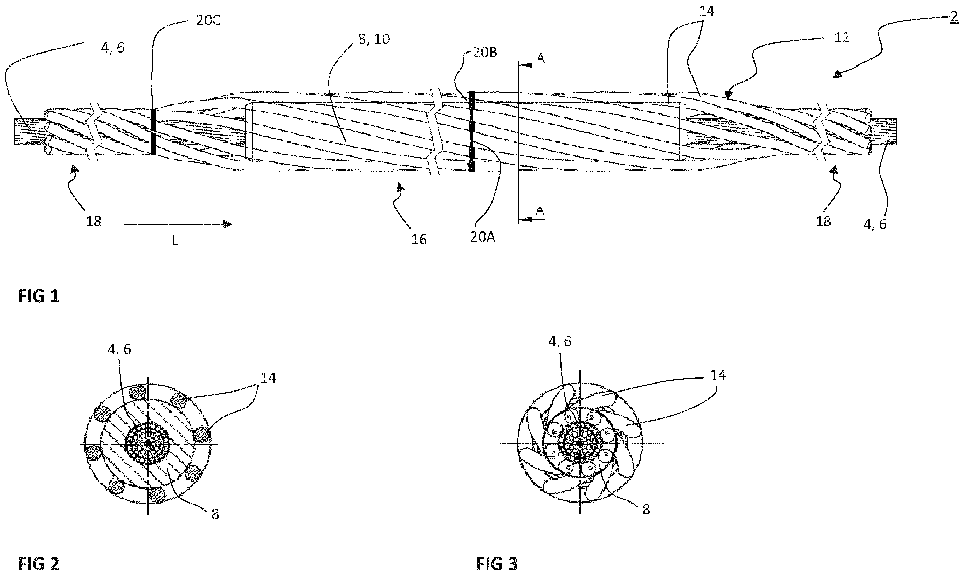

Die in der FIG 1 dargestellte Seilverbindung 2 verbindet Seilenden 4 zweier Leiterseile 6. die Seilverbindung 2 erstreckt sich in einer Seil-Längsrichtung L. Die beiden Seilenden 4 sind im Ausführungsbeispiel mithilfe eines hülsenförmigen Pressverbinders 8 miteinander verbunden. Hierzu sind die beiden Seilenden 4 jeweils an gegenüberliegenden Seiten einer Presshülse des Pressverbinders 8 eingesteckt und mit der Presshülse verpresst. Der Pressverbinder 8 definiert hierbei einen Verbindungsbereich 10.

In diesem Verbindungsbereich 10 ist eine Spiralarmatur 12 angeordnet, welche ausgebildet ist durch mehrere Spiralstäbe 14. Die Spiralarmatur 12 ist um den Verbindungsbereich 10 und damit um den Pressverbinder 8 sowie die beiden angrenzenden Seilenden 4 herumgewickelt. Dabei liegen die jeweiligen Spiralstäbe 14 bevorzugt sowohl am Pressverbinder 8 als auch an den angrenzenden Seilenden 4 jeweils unmittelbar an. Dies bedeutet, dass jeweilige Abschnitte der Spiralstäbe 14 bevorzugt unmittelbar am Außenumfang der Seilenden 4 als auch am Außenumfang des Pressverbinders 8 anliegen.

Die einzelnen Spiralstäbe 14 werden jeweils vorgefertigt und weisen einen mittleren Abschnitt 16 sowie beidseitig jeweils einen sich an diesen anschließenden Endabschnitt 18 auf.

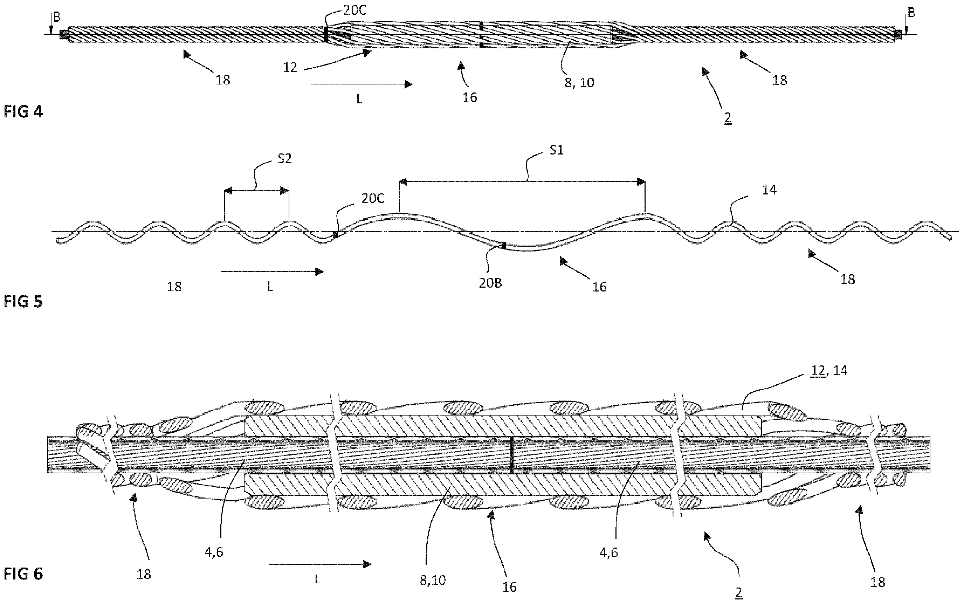

Während in der FIG 1 (sowie in der FIG 6) die Endabschnitte 18 unterbrochen dargestellt sind, sind diese in der FIG 4 in einer Gesamtdarstellung ohne Unterbrechung dargestellt. Wie anhand der FIG 4 zu erkennen ist, weisen die Endabschnitte 18 in Längsrichtung L im Ausführungsbeispiel zumindest annähernd die gleiche Länge wie der mittlere Abschnitt auf. Die Länge der einzelnen Abschnitte ist abhängig von dem jeweiligen Anwendungsfall. Die Länge der Endabschnitte 18 liegt beispielsweise im Bereich zwischen dem 0,5 -fachen bis 4 fachen der Länge des mittleren Abschnitts.

Im Verbindungsbereich 10 ist der Durchmesser infolge des Pressverbinder 8 gegenüber dem Durchmesser der Seilenden 4 deutlich erhöht, wie dies insbesondere aus der Querschnittsdarstellung der FIG 2 oder auch aus der Draufsicht gemäß der FIG 3 zu erkennen ist. So beträgt der Durchmesser im Verbindungsbereich 10 beispielsweise bis zum Doppelten im Vergleich zum Durchmesser der Seilenden 4.

Wie anhand der Darstellungen der Fig 2 und FIG 3 weiterhin gut zu erkennen ist, besteht das jeweilige Leiterseil 6 selbst aus einer Vielzahl von einzelnen Drähten, die in mehreren Lagen miteinander verseilt sind.

Im Endabschnitt 18 liegen die einzelnen Spiralstäbe 14 in Umfangsrichtung zumindest nahezu aneinander an, sodass sie eine im Wesentlichen fast geschlossene Mantellage bilden, wie dies speziell anhand der FIG 4 zu erkennen ist.

Anhand der FIG 3 ist zu erkennen, dass die einzelnen Spiralstäbe 14 in Umfangsrichtung zueinander lediglich einen Abstand aufweisen, der kleiner dem Durchmesser eines jeweiligen Spiralstabs 14 ist insbesondere nur bis zu zwei Millimeter im Endabschnitt 18

Im mittleren Abschnitt 16 sind die Spiralstäbe 14 demgegenüber gereckt, sodass sie in Umfangsrichtung zueinander einen deutlich größeren Abstand aufweisen. Die Spiralstäbe weisen eine deutlich vergrößerte Steigung S1 im Vergleich zu einer Steigung S2 der Spiralstäbe 14 in den Endabschnitten 18 auf.

Die unterschiedlichen Steigungen S1, S2 sowie die gereckte Ausgestaltung des Spiralstabs 14 im mittleren Abschnitt 16 sind gut anhand der FIG 5 zu erkennen. Die Steigung S1, S2 ist jeweils definiert als der Abstand in Längsrichtung L zwischen zwei aufeinanderfolgenden Spiralabschnitten, wenn also der Spiralstab 14 sich um 360° gedreht hat.

Wie weiterhin speziell anhand der FIG 1 zu erkennen ist, weist der Pressverbinder 8 eine erste Mittenmarkierung 20A ein jeweiliger Spiralstab 14 eine zweite Mittenmarkierung 20B auf. Schließlich ist an jedem der Spiralstäbe 14 eine weitere Markierung 20C angebracht, welchen den Beginn des mittleren Abschnitts 16 und damit des gereckten Abschnitts markiert.

Diese Markierungen 20 A, B, C dienen insbesondere als Montagehilfe. Bei der Montage wird wie folgt vorgegangen:

Zunächst werden die einzelnen Spiralstäbe 14 vorgefertigt, mit den beiden Endabschnitten 18 und dem dazwischen liegenden, gereckten mittleren Abschnitt 16, so dass sich beispielsweise der in FIG 5 dargestellte Spiralstab 14 ergibt. Im mittleren Abschnitt 16 weist der vorgefertigte Spiralstab daher allgemein einen größeren (Innen-) Durchmesser auf als in den Endabschnitten 18. Diese Innendurchmesser sind an die Außendurchmesser des Verbindungsbereichs 10 bzw. des Leiterseils 6 angepasst, d.h. der jeweilige Innendurchmesser beim Spiralstab 14 ist gleich dem zugehörigen Außendurchmesser und vorzugsweise (geringfügig) kleiner. Ist der Innendurchmesser kleiner, so wird der mittlere Abschnitt 16 in der montierten Endposition gegen den Pressverbinder 8 und die Endabschnitte 18 werden gegen die Leiterseile 6 gedrückt.

Der jeweilige, vorgefertigte Spiralstab 14 wird an den Pressverbinder 8 angelegt, und zwar vorzugsweise so, dass die Mittenmarkierungen 20A, 20B aneinander ausgerichtet sind. Anschließend wird der Spiralstab 14 jeweils beidseitig zu seinen äußeren Enden hin jeweils um den Pressverbinder 8 sowie die daran angrenzenden Seilenden 4 herumgewickelt. Hierzu wird das jeweilige Ende des Spiralstabs 14 um das jeweilige Leiterseil 6 mehrfach herumgeführt. Durch die Vorfertigung des jeweiligen Spiralstabs 14 mit zumindest der zweiten Mittenmarkierung 20B ist sichergestellt, dass der Spiralstab 14 korrekt positioniert ist und sowohl im Verbindungsbereich 10 (Pressverbinder 8) als auch an den Seilenden 4 unmittelbar eng anliegt. Insgesamt ist dadurch ein guter thermischer sowie elektrischer Kontakt ausgebildet.

Die beiden Leiterseile 6 bilden mit der Seilverbindung 2 einen Leiterseil-Strang für eine elektrische Freileitung aus. Die Leiterseile 6 mit der Seilverbindung 2 sind ausgelegt zum Einsatz bei einer solchen elektrischen Freileitung, wie sie eingangs definiert wurde. Im montierten Zustand sind sie bei einer solchen elektrischen Freileitung eingesetzt.

Bezugszeichenliste

| | |
|---|---|
| 2 | Seilverbindung |
| 4 | Seilende |
| 6 | Leiterseil |
| 8 | Pressverbinder |
| 10 | Verbindungsbereich |
| 12 | Spiralarmatur |
| 14 | Spiralstab |
| 16 | mittlerer Abschnitt |
| 18 | Endabschnitt |
| 20A | erste Mittenmarkierung |
| 20B | zweite Mittenmarkierung |
| 20C | weitere Markierung |
| L | Längsrichtung |
| S1 | Steigung im mittleren Abschnitt |
| S2 | Steigung im Endabschnitt |

**Patentansprüche**

1. Seilverbindung insbesondere einer Freileitung mit einem Verbindungsbereich, in dem zwei Seilenden eines Seils miteinander verbunden sind, wobei der Verbindungsbereich einen größeren Durchmesser als die Seilenden aufweist, wobei eine Spiralarmatur mit mehreren Spiralstäben vorgesehen ist, welche um den Verbindungsbereich sowie die daran angrenzenden Bereiche des Seils gewickelt sind.

2. Seilverbindung nach dem vorhergehenden Anspruch, bei der der Verbindungsbereich durch einen hülsenförmigen Pressverbinder ausgebildet ist, in den die beiden Seilenden eingeführt und verpresst sind.

3. Seilverbindung nach einem der vorhergehenden Ansprüche, bei der die Spiralstäbe unmittelbar am Verbindungsbereich sowie auch unmittelbar an den daran angrenzenden Bereichen des Seils anliegen.

4. Seilverbindung nach einem der vorhergehenden Ansprüche, bei der die Spiralstäbe zwei gegenüberliegende Endabschnitte sowie einen zwischen diesen angeordneten mittleren Abschnitt aufweisen und der mittlere Abschnitt im Bereich des Verbindungsbereichs angeordnet ist und im Vergleich zu den Endabschnitten eine andere Steigung aufweist.

5. Seilverbindung nach einem der vorhergehenden Ansprüche, bei der die Steigung im mittleren Bereich um 100% bis 400% und insbesondere im Bereich von 200% bis 300% größer ist als die Steigung in den Endbereichen.

6. Seilverbindung nach einem der beiden vorhergehenden Ansprüche, bei der die Spiralstäbe zumindest im Bereich der Endabschnitte eine nahezu geschlossen Mantellage ausbilden.

7. Seilverbindung nach einem der vorhergehenden Ansprüche, bei der die Spiralstäbe und / oder der Verbindungsbereich zumindest eine Hilfsmarkierung, insbesondere eine Mittenmarkierung aufweist, die eine definierte Stelle des Spiralstabs, insbesondere eine Mitte des mittleren Abschnitts und/oder des Verbindungsbereiches markiert.

8. Seilverbindung nach einem der vorhergehenden Ansprüche, bei der zwischen der Spiralarmatur und dem Seil eine Paste angebracht ist, die als Haftvermittler dient und / oder elektrisch leitfähig ist.

9. Seilverbindung nach dem vorhergehenden Anspruch, bei der die Paste Partikel aufweist, die vorzugsweise eine Körnung im Bereich von 20 bis 150 aufweisen, wobei der Anteil der Partikel insbesondere in einem Bereich zwischen 8 Vol % und 30 Vol% liegt.

10. Seilverbindung nach einem der vorhergehenden Ansprüche, bei der

   - die Spiralarmatur insgesamt eine Länge im Bereich von mehreren Metern, beispielsweise im Bereich von 2 bis 12 Meter, insbesondere im Bereich von 2 bis 7 Metern aufweist und / oder
   - der Verbindungsbereich eine Länge im Bereich von 20cm bis 2m und insbesondere im Bereich von 30cm bis 1,6m aufweist, und/ oder
   - die Spiralstäbe jeweils einen Durchmesser im Bereich von 4 mm bis 12 mm und insbesondere im Bereich von 5 mm bis 10 mm aufweisen, und/ oder
   - die Spiralstäbe aus einem metallischen Werkstoff bestehen.

11. Vorgefertigte Spiralstäbe für eine Seilverbindung nach einem der vorhergehenden Ansprüche, welcher einen mittleren Abschnitt aufweist, an den sich beidendseitig Endabschnitte anschließen, wobei der mittlere Abschnitt eine größere Steigung als die Endabschnitte und / oder einen größeren Innendurchmesser als die Endabschnitte aufweisen.

12. Vorgefertigte Spiralstäbe nach dem vorhergehenden Anspruch, wobei unterschiedliche Gruppen von Spiralstäben vorgesehen sind, die sich im Hinblick auf ihre Steigungen und/ oder freien Innendurchmesser unterscheiden.

13. Verfahren zum Verbinden zweier Seilenden eines Seils, bei dem die Seilenden zunächst in einem Verbindungsbereich insbesondere durch einen hülsenförmigen Pressverbinder miteinander verbunden werden und anschließend eine Spiralarmatur mit mehreren Spiralstäben um den Verbindungsbereich sowie die daran angrenzenden Bereichen des Seils gewickelt wird.

14. Verfahren nach dem vorhergehenden Anspruch, bei dem die Spiralstäbe der Spiralarmatur zwei gegenüberliegende Endabschnitte sowie einen zwischen diesen angeordneten mittleren Abschnitt aufweisen, wobei die Steigung eines jeweiligen Spiralstabs im mittleren Abschnitt gegenüber den Endabschnitten vergrößert ist und der mittlere Abschnitt im Verbindungsgereich angeordnet wird.

15. Verfahren nach einem der beiden vorhergehenden Ansprüche, bei dem die einzelnen Spiralstäbe sukzessive auf das Leiterseil im Verbindungsbereich aufgedreht werden, wobei der mittlere Abschnitt an den Verbindungsbereich angelegt wird und das Aufdrehen des jeweiligen Spiralstabs von dem mittleren Abschnitt ausgehend beidseitig nach außen erfolgt.

**FIG 1**

**FIG 2**

**FIG 3**

EP 4 054 034 A1

FIG 4

FIG 5

FIG 6

Europäisches
Patentamt

European
Patent Office

Office européen
des brevets

## EUROPÄISCHER RECHERCHENBERICHT

**Nummer der Anmeldung**

**EP 22 15 9581**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 420 503 A (PREFORMED LINE PRODUCTS CO) 7. Januar 1976 (1976-01-07) | 1-7, 10-15 | INV. H02G15/08 H02G7/05 H01R4/14 |
| Y | * Seite 1, Zeile 25 – Zeile 83; Abbildungen 1, 2 * <br> * Seite 2, Zeile 14 – Zeile 76; Abbildungen 1-3 * <br> ----- | 8,9 | |
| Y | US 3 573 346 A (APPLEBY HARRY A) 6. April 1971 (1971-04-06) * Spalte 3, Zeile 16 – Zeile 24; Abbildungen 2-7 * <br> ----- | 8,9 | |
| Y | US 9 425 527 B2 (SUMITOMO ELECTRIC INDUSTRIES [JP]) 23. August 2016 (2016-08-23) * Spalte 11, Zeile 61 – Spalte 12, Zeile 5 * <br> ----- | 8,9 | |
| A | US 3 007 243 A (PETERSON THOMAS F) 7. November 1961 (1961-11-07) * Spalte 1, Zeile 19 – Zeile 24 * <br> ----- | 10 | |

**RECHERCHIERTE SACHGEBIETE (IPC)**

H02G
H01R

Der vorliegende Recherchenbericht wurde für alle Patentansprüche erstellt

| Recherchenort | Abschlußdatum der Recherche | Prüfer |
|---|---|---|
| Den Haag | 18. Juli 2022 | Marinov, Kolyo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 9581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2022

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| GB 1420503 | A | | 07-01-1976 | DE | 2323140 | A1 | 15-11-1973 |
| | | | | FR | 2183919 | A1 | 21-12-1973 |
| | | | | GB | 1420503 | A | 07-01-1976 |
| | | | | JP | S4949191 | A | 13-05-1974 |
| | | | | JP | S5314309 | B2 | 16-05-1978 |
| | | | | US | 3749816 | A | 31-07-1973 |
| US 3573346 | A | | 06-04-1971 | AT | 316940 | B | 12-08-1974 |
| | | | | BE | 746753 | A | 17-08-1970 |
| | | | | CH | 503922 | A | 28-02-1971 |
| | | | | DE | 2025910 | A1 | 18-02-1971 |
| | | | | ES | 377683 | A1 | 16-07-1972 |
| | | | | FR | 2056208 | A5 | 14-05-1971 |
| | | | | GB | 1311196 | A | 21-03-1973 |
| | | | | IE | 33726 | B1 | 02-10-1974 |
| | | | | JP | S543232 | B1 | 20-02-1979 |
| | | | | NL | 7005306 | A | 26-01-1971 |
| | | | | US | 3573346 | A | 06-04-1971 |
| | | | | ZA | 703607 | B | 27-01-1971 |
| US 9425527 | B2 | | 23-08-2016 | US | 2015325937 | A1 | 12-11-2015 |
| | | | | WO | 2015001994 | A1 | 08-01-2015 |
| US 3007243 | A | | 07-11-1961 | BE | 564018 | A | 18-07-2022 |
| | | | | US | 3007243 | A | 07-11-1961 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 402097 A